# FASCICULE DE BREVET EUROPEEN

(11) **EP 4 396 599 B1**
(45) Date de publication et mention de la délivrance du brevet: **04.11.2026**
(21) Numéro de dépôt: 22772944.9
(22) Date de dépôt: 02.09.2022
(51) Int. Cl.: G01S 7/02, G01S 7/03, G01S 13/931, H01Q 3/46, H01Q 15/00, H01Q 19/13, H01Q 1/32

(54) **ANTENNE DIRECTIVE POUR SYSTÈME RADAR DE VÉHICULE**
RICHTANTENNE FÜR FAHRZEUGRADARSYSTEM
DIRECTIONAL ANTENNA FOR VEHICLE RADAR SYSTEM

(30) Priorité: 03.09.2021 FR 2109252
(43) Date de publication de la demande: 10.07.2024
(73) Titulaire: OPmobility SE, 69007 Lyon (FR)
(72) Inventeur: BANCELIN, Mathieu, 01150 SAINTE-JULIE (FR); CRETIER, Romain, 01150 SAINTE-JULIE (FR); ROCHEBLAVE, Laurent, 01150 SAINTE-JULIE (FR); STABLO, Frédéric, 01150 SAINTE-JULIE (FR)
(74) Mandataire: LLR
(86) Numéro de dépôt international: PCT/EP2022/074495
(87) Numéro de publication internationale: WO 2023/031420

(56) Documents cités:
- WO-A1-2020/043633
- US-A1- 2010 033 389

## Description

La présente invention concerne le domaine des véhicules à moteur, par exemple des véhicules automobiles, équipés d'un système radar pour émettre et/ou recevoir une onde électromagnétique dans une direction souhaitée, notamment pour détecter un obstacle.

On connaît des véhicules automobiles équipés de dispositifs de type radar, généralement positionnés sur les pare-chocs avant et arrière du véhicule. Ces dispositifs radars sont utilisés pour l'assistance au stationnement mais également pour l'assistance à la conduite, par exemple pour les applications de régulation de la vitesse des véhicules en fonction du trafic mieux connues sous le sigle anglo-saxon ACC (« Adaptative Cruise Control ») dans lesquelles le dispositif radar détecte la vitesse et la distance d'un véhicule précédant le véhicule porteur du dispositif radar. Un tel radar sert en particulier à réguler la vitesse des véhicules en fonction du trafic et/ou d'obstacles sur la route. Le radar détecte la vitesse et la distance de l'objet précédant le véhicule porteur, de façon à maintenir notamment une distance de sécurité entre les véhicules.

De façon générale, un domaine important des applications de radars de l'industrie automobile est celui de la carrosserie des véhicules dans laquelle on intègre de plus en plus de modules radars pour permettre la détection périphérique totale autour du véhicule, par exemple pour des équipements tels que des systèmes d'assistance aux manœuvres de parking, des systèmes d'assistance de recul ou des installations de protection des piétons ou autres systèmes de ce type. Cependant ces différents radars sont de types différents suivant leur champ de détection (longue ou courte distance, détection frontale ou latérale, ...) et leur fonction (parking, conduite autonome ...) mais aussi suivant leur fabricant, ce qui ne leur permet pas de pouvoir consolider de façon optimale les données fournies par chacun indépendamment aux divers équipements du véhicule qui peuvent les exploiter (freinage, direction, phares, alarmes sonores ou visuelles ...).

Ainsi, afin de mieux caractériser l'environnement périphérique du véhicule, les constructeurs automobiles ont besoin de dispositifs permettant d'améliorer, d'une part, la taille du volume à surveiller autour du véhicule, et d'autre part, la résolution du traitement des informations issues de ces dispositifs. Ceci, afin que le véhicule interagisse au mieux, c'est-à-dire avec plus de précision et plus rapidement, avec son environnement, pour notamment, éviter des accidents, faciliter les manœuvres et rouler de façon autonome.

Afin d'augmenter la détection périphérique en volume (3D) autour du véhicule, les constructeurs automobiles sont amenés à multiplier le nombre de radars distribués sur une surface donnée.

Cependant, l'augmentation du nombre de radars utilisés, engendre une augmentation du coût.

De plus, l'augmentation du nombre de radars nécessite d'alimenter en continu de nombreuses pistes radiofréquences, ce qui consomme beaucoup d'énergie, ce qui est très préjudiciable notamment pour des véhicules autonomes et/ou électriques.

Par ailleurs, même si les radars peuvent être un peu miniaturisés, l'augmentation du nombre de radars distribués sur une surface donnée peut être difficile à réaliser du fait de la surface disponible limitée (la taille des pièces de carrosserie ne peut être augmentée) ainsi que la présence d'autres équipements, d'autant plus qu'il peut être nécessaire de conserver une distance minimale entre chaque radar pour éviter qu'ils n'interfèrent entre eux.

Pour obtenir des informations supplémentaires relatives à la position et à la vitesse d'un obstacle données par les radars, on recherche des dispositifs ayant notamment une résolution spatiale accrue permettant par exemple de reconnaitre les objets (environnement ou obstacles) entourant le véhicule, de suivre leur trajectoire, d'en constituer une imagerie la plus complète possible.

Ainsi, les véhicules s'équipent de plus en plus de dispositifs complémentaires aux radars, tels que des LIDAR et des caméras.

La résolution spatiale exprime la capacité d'un dispositif d'observation à distinguer les détails. Elle peut être caractérisée notamment par la distance minimale qui doit séparer deux points contigus pour qu'ils soient correctement discernés.

Dans le cas d'un radar, cette distance de résolution est fonction du rapport entre la longueur d'onde de l'onde utilisée pour l'observation, et la taille de l'ouverture du dispositif d'observation. Ainsi, pour améliorer la résolution spatiale, c'est-à-dire diminuer la distance de résolution, il est nécessaire de diminuer la longueur d'onde (augmenter la fréquence de l'onde) et/ou nécessaire d'augmenter l'ouverture du dispositif d'observation. En effet, la résolution spatiale R est caractérisée par l'équation suivante : $R = \frac{c ∗ L}{f ∗ O}$ avec c la vitesse de la lumière, *L* la distance entre le dispositif d'observation et la cible, *f* la fréquence du radar et *O* l'ouverture du dispositif d'observation.

C'est la raison pour laquelle on cherche aujourd'hui à utiliser des radars fonctionnant à plus haute fréquence, par exemple à 77GhZ au lieu de 24GHz.

Et au contraire, la miniaturisation des radars actuels conduit à réduire leur ouverture donc leur résolution.

Par ailleurs, un problème rencontré pour un radar porté par une pièce de carrosserie concerne le positionnement du radar. En effet, il est important de pouvoir assurer l'intégrité d'un radar, afin qu'il remplisse sa fonction correctement, même en cas de déformation de la pièce de carrosserie le portant (choc, dilatation thermique, ...). Il est donc nécessaire d'assurer un bon positionnement du radar (direction d'émission/réception maintenue) pendant toute la durée d'utilisation de la fonction radar.

Il convient donc de fournir une solution permettant de fournir la position et la vitesse des objets situés autour du véhicule et d'obtenir une portée et une résolution spatiale plus adaptées, tout en limitant le coût et la consommation énergétique du dispositif de détection. Cela permet d'améliorer la détection d'objets ou de personnes autour du véhicule et de faciliter l'implantation de tels systèmes dans des véhicules autonomes, notamment des véhicules électriques dont la consommation doit être limitée au maximum.

Par ailleurs, quel que soit le type de radar porté par une pièce de carrosserie, un problème rencontré concerne la vulnérabilité aux chocs des composants électroniques. En effet, lors d'un choc déformant la paroi portant le radar, il y a un risque d'endommagement des composants, tels que l'unité électronique portant notamment l'émetteur-récepteur des ondes radar et leur électronique de contrôle, rendant inapte la fonction radar. Or le remplacement de ces composants est couteux.

Le document WO 2020/043633 A1 divulgue une antenne directive pour système radar selon le préambule de la revendication 1. Les documents EP 3 625 582 A1 et US 2010/033389 A1 divulguent des dispositifs pour systèmes radar.

L'invention a notamment pour but de remédier aux inconvénients précités, en fournissant une antenne directive pour pièce de carrosserie de véhicule à moteur, apte à transmettre (émettre et/ou recevoir) une onde électromagnétique dans une direction donnée depuis une grande surface (en relation avec la taille de la pièce de carrosserie elle-même).

A cet effet, l'invention a pour objet une antenne directive pour système radar de véhicule à moteur selon la revendication 1.

Grâce à une telle antenne il est possible d'augmenter l'ouverture du système radar muni d'une telle antenne, sans avoir à multiplier le nombre de radar, et sans avoir à multiplier les composants électroniques.

De plus, grâce à la dissociation entre l'unité électronique et l'antenne directive il est ainsi possible de positionner l'antenne directive dans une zone du véhicule permettant d'imager correctement l'environnement du véhicule, tout en positionnant l'unité électronique dans une zone moins soumise aux chocs.

Une zone moins soumise aux chocs est claire pour les spécialistes, et dépend de la pièce de carrosserie sur laquelle est installée le système radar. Par exemple, pour un pare-chocs, une zone moins soumise aux chocs, peut être une zone en retrait de la peau extérieure, et/ou une zone déportée latéralement (vers les ailes) par rapport au véhicule et/ou une zone déportée verticalement (par exemple plus basse que l'antenne directive).

Suivant d'autres caractéristiques optionnelles du système radar, prises seules ou en combinaison :
- au moins une des parois comporte, sur sa face externe à la cavité, un connecteur pour guide d'onde.
- la face externe à la cavité ou la face interne de la seconde paroi constitue une surface réfléchissante aux ondes électromagnétiques présentes dans la cavité réfléchissante.
- la seconde paroi constitue un circuit imprimé.
- le circuit imprimé comporte une face interne tournée vers l'intérieur de la cavité réfléchissante, et sur laquelle est imprimée la métasurface.
- la métasurface comporte une surface pilotée et des diodes, et le circuit imprimé comporte sur sa face externe, ou est relié à, une électronique de contrôle secondaire de la surface pilotée.
- la zone de transmission d'ondes électromagnétiques est recouverte d'une couche partiellement réfléchissante aux ondes électromagnétiques.
- l'ensemble des parois réfléchissantes sont réalisées en aluminium ou en matière plastique recouverte d'une couche réfléchissante apte à réfléchir les ondes électromagnétiques dans la cavité réfléchissante.
- l'ensemble de parois réfléchissantes sont réalisées monobloc.
- l'ensemble des parois réfléchissantes comporte une première paire de parois réfléchissantes se faisant face, et une seconde paire de parois réfléchissantes se faisant face et sensiblement perpendiculaires aux parois de la première paire.
- le boitier a une forme sensiblement de parallélépipède.
- la première paire de parois réfléchissantes est apte à venir s'emboîter de façon étanche dans la seconde paire de parois réfléchissantes.
- le boitier comporte un couvercle et un réceptacle en matière plastique.

L'invention concerne également un système radar comportant au moins une antenne directive selon l'une des revendications précédentes.

Selon un mode de réalisation, le système radar comprend :
- une unité électronique située en dehors et à distance du boitier, comprenant un émetteur primaire et un récepteur primaire d'ondes électromagnétiques ;
- au moins un guide d'ondes pour propager des ondes électromagnétiques entre l'émetteur primaire et la cavité et entre la cavité et le récepteur primaire.

Selon une variante, l'unité électronique peut être configurée pour opérer à des fréquences supérieures à 60GHz, notamment entre 75 et 80GHz,de préférence à 77GHz.

L'invention concerne également une pièce de carrosserie comportant une antenne directive selon l'invention.

L'invention concerne également véhicule à moteur comprenant une pièce de carrosserie selon l'invention.

### Brève description des figures

L'invention sera mieux comprise à la lecture de la description qui va suivre donnée uniquement à titre d'exemple et faite en se référant aux dessins annexés dans lesquels :
[Fig. 1] la figure 1 illustre un exemple de véhicule automobile équipé d'un système radar muni d'une antenne directive selon l'invention.
[Fig. 2] la figure 2 illustre une vue en perspective un premier mode de réalisation d'antenne directive selon l'invention.
[Fig. 3] la figure 3 illustre une vue en perspective et en coupe de l'antenne directive de la figure 2.
[Fig. 4] la figure 4 illustre une vue en perspective, vu de dessus, un second mode de réalisation d'antenne directive selon l'invention.
[Fig. 5] la figure 5 illustre une vue en perspective, vu de dessous, de l'antenne directive de la figure 4.
[Fig. 6] la figure 6 illustre une vue en éclaté de l'antenne directive des figures 4 et 5.
[Fig. 7] la figure 7 illustre une vue en éclaté d'un troisième mode de réalisation d'antenne directive selon l'invention.
[Fig. 8] la figure 8 illustre une vue en perspective et en coupe de l'antenne directive de la figure 7.
[Fig. 9] la figure 9 illustre un exemple de système radar muni d'une antenne directive selon l'invention.

### Description détaillée

Dans les figures, les éléments identiques portent les mêmes références. Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

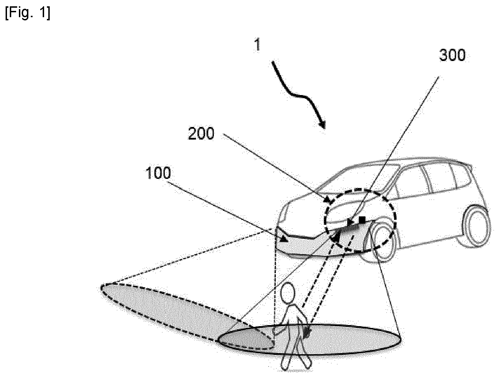

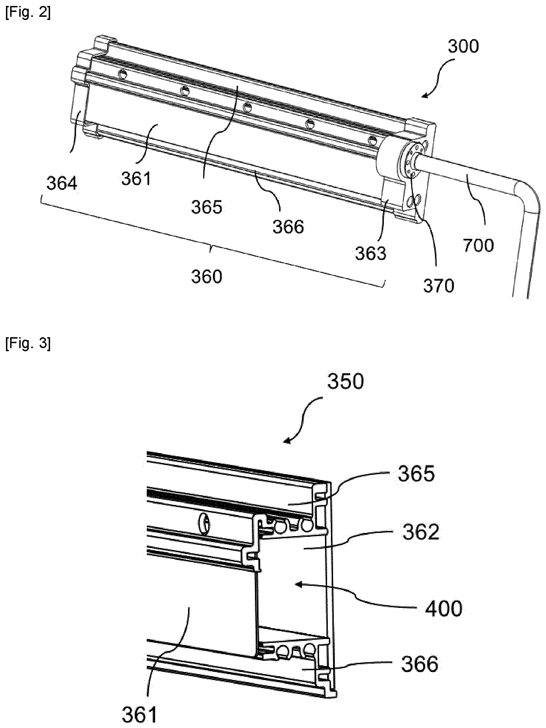

Nous nous référons à la figure 1 qui illustre un exemple de véhicule automobile 1 équipé d'un système radar 200 muni d'une antenne directive 300 selon l'invention. Comme illustré sur les figures 2 à 8, une telle antenne directive 300 comprend un boitier 350. Le boitier 350 comporte une enveloppe réfléchissante comportant un volume intérieur formant une cavité réfléchissante 400 pour ondes électromagnétiques. L'enveloppe réfléchissante est délimitée par un ensemble 360 de parois comprenant :
- une première paroi 361, appelée paroi de transmission 361, car comportant au moins une zone 426 de transmission d'ondes électromagnétiques entre l'intérieur et l'extérieur du boitier 350. Par ailleurs, en dehors de cette zone, la paroi de transmission 361 est apte à réfléchir les ondes électromagnétiques au sein de la cavité réfléchissante 400.
- une deuxième paroi, appelée paroi de guidage 362, car munie d'une métasurface 500 configurée pour guider des ondes électromagnétiques dans une direction privilégiée (vers la paroi de transmission 361, ou vers un guide d'onde 700). Cette paroi de guidage est opposée à la paroi de transmission 361. La paroi de guidage 362 forme le fond de l'enveloppe réfléchissante.
- un ensemble de parois latérales réfléchissantes 363-366 reliant de façon continue (sans fuite d'ondes électromagnétiques) les première 361 et seconde 362 parois, chaque paroi latérale étant apte à réfléchir les ondes électromagnétiques au sein de la cavité réfléchissante 400.

Le boitier 350 comporte des moyens de fixation et des moyens de connexions à divers éléments.

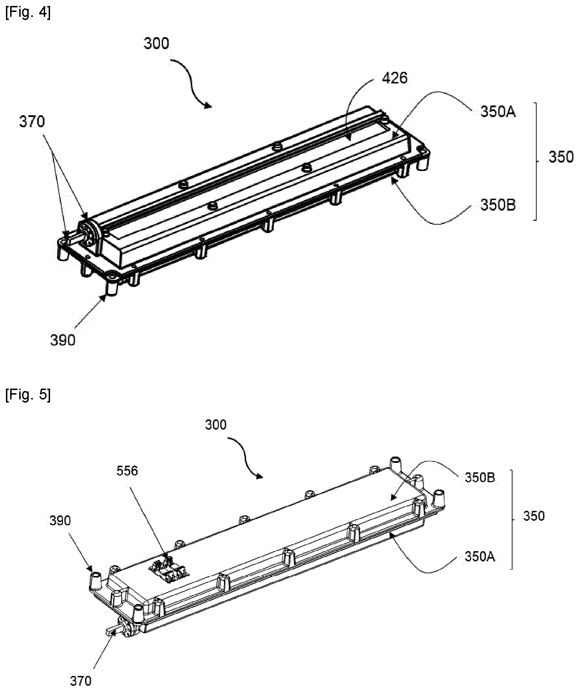

Notamment, le boitier comporte des moyens de fixation 390 (figure 4 et 5 par exemple) à une pièce de carrosserie 100. Ces moyens de fixations sont configurés de façon à permettre de positionner l'antenne 300 au plus près de la surface interne (par référence au véhicule) de la pièce de carrosserie 100, de manière à limiter les pertes ou les risque de réflexion sur la pièce de carrosserie.

De plus, au moins une des parois de l'ensemble 360 comporte, sur sa face externe à la cavité 400, un connecteur 370 pour guide d'onde 700 (figures 2 et 4 à 7). Le boitier 350 comporte une ouverture afin que le guide d'onde 700 puisse traverser le boitier 350 et la paroi réfléchissante, de manière à ce que le guide d'onde 700 débouche dans la cavité réfléchissante 400.

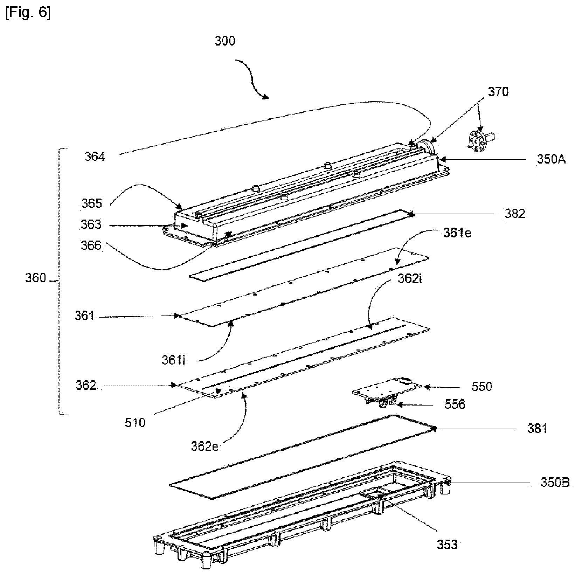

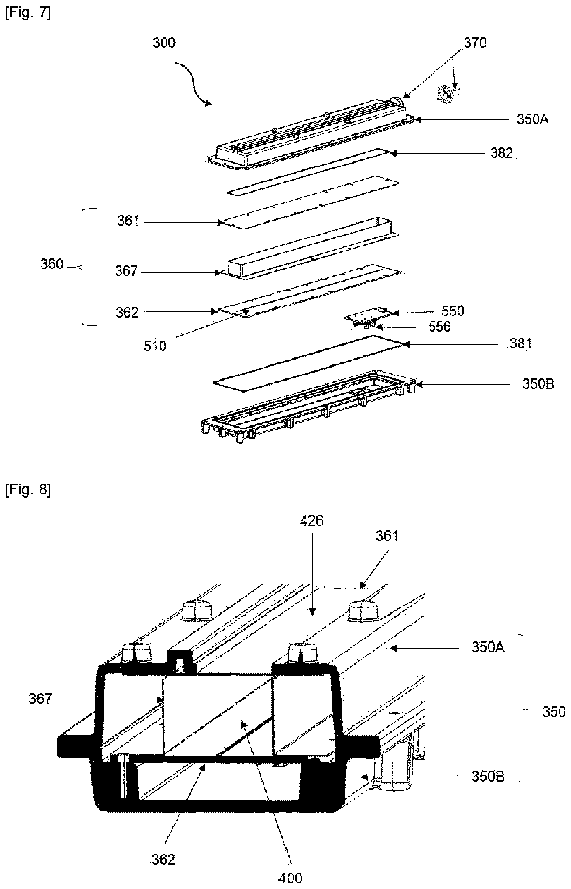

Préférentiellement, le boitier 350 comporte des éléments d'étanchéité 381 et 382 (figures 6 et 7), configurés pour rendre le boitier 350 étanche à l'environnement.

Le boitier 350 peut également comporter une électronique de contrôle secondaire 550 de la métasurface 500. Cette électronique de contrôle secondaire 550 permet par exemple d'intégrer le registre à décalage nécessaire au pilotage de la surface pilotée, ou selon un autre exemple, de spécialiser l'antenne directive 300 si celle-ci fait partie d'un ensemble d'antennes. Selon un mode de réalisation préférentiel, cette électronique de contrôle secondaire est intégrée directement à la paroi de guidage 362, de préférence sur la face externe à la cavité (362e).

### La paroi de guidage 362

La paroi de guidage 362 comporte une face externe 362e à la cavité réfléchissante 400, et une face interne 362i à cette cavité 400. La paroi de guidage 362 permet de guider les ondes émises dans la cavité 400 par le guide d'onde 700 vers la paroi de transmission 361. Réciproquement, la paroi de guidage 362 permet de guider les ondes reçues dans la cavité 400 depuis l'extérieur du boitier 350, après rebond sur un obstacle, vers le guide d'onde 700.

La métasurface 500 comporte des surfaces pilotées et des diodes. La paroi de guidage 362 constitue un circuit imprimé 510. Le circuit imprimé 510 comporte une face interne 510i tournée vers l'intérieur de la cavité réfléchissante 400, et sur laquelle sont notamment imprimées les surfaces pilotées et de préférences sur laquelle sont soudées les diodes.

Le circuit imprimé 510 comporte également ou est relié à des éléments de connectique de contrôle 556 (figures 5-7) apte à connecter la métasurface à une électronique de contrôle principale (au sein de l'unité électronique 900 par exemple) de la surface pilotée.

Sur l'autre face du circuit imprimé 510, sa face externe 510e, peuvent être implantés des pistes et composants électroniques ayant une autre fonction que la métasurface. Par exemple, pour intégrer le registre à décalage nécessaire au pilotage de la surface pilotée.

Selon un mode de réalisation, la face externe 510e du circuit imprimé 510 constitue une surface réfléchissante aux ondes électromagnétiques présentes dans la cavité réfléchissante 400. Elle peut par exemple comporter une couche réfléchissante telle qu'une couche de cuivre. La paroi de guidage 362 forme alors la paroi de fond de l'enveloppe réfléchissante. La paroi de fond de l'enveloppe réfléchissante peut également être une autre paroi. Par exemple, la paroi de fond d'un réceptacle 350B (décrit ci-après) : une telle paroi est constituée d'un matériau réfléchissant les ondes électromagnétiques ou est recouverte d'une couche réfléchissante .

Selon un mode de réalisation, la paroi de guidage 362 intègre une électronique de contrôle secondaire (par exemple le registre à décalage), de préférence sur la face externe à la cavité (362e).

### La paroi de transmission 361

La première paroi, paroi de transmission 361, comporte au moins une zone 426 de transmission d'ondes électromagnétiques entre l'intérieur et l'extérieur du boitier 350. Par ailleurs, si la zone 426 ne recouvre pas toute la paroi de transmission 361, en dehors de cette zone 426, la paroi de transmission 361 est apte à réfléchir les ondes électromagnétiques au sein de la cavité réfléchissante 400.

Pour obtenir la propriété de transmission de la zone de transmission 426, cette zone peut être :
- réalisée en une matière différente que la matière réfléchissante du reste de la paroi 361, cette matière différente étant au moins partiellement perméable aux ondes électromagnétiques ;
- réalisée en un matériau non réfléchissant mais recouvert d'une couche partiellement réfléchissante aux ondes électromagnétiques ;
- former une zone pilotée de façon à modifier sa transmittance.

Pour obtenir la propriété de réflexion dans la cavité réfléchissante 400, la paroi 361 peut être réalisée, sauf en regard de la zone 426 :
- en un matériau réfléchissant, tel que du métal. Dans ce cas, la zone 426 de transmission est réalisée dans une autre matière, ou par amincissement par exemple.
- en un matériau non réfléchissant, ou partiellement perméable aux ondes électromagnétiques, mais recouvert d'une couche réfléchissante en dehors de la zone 426. La paroi de transmission 361 comporte une face interne à la cavité réfléchissante 400 et une face externe à cette même cavité 400. L'une ou l'autre de ces faces peut être partiellement (sauf au niveau de la zone 426) recouverte d'une telle couche. La couche réfléchissante peut par exemple être un revêtement ou un placage (« coating/plating ») déposé par un procédé de dépôt physique en phase vapeur (acronyme anglais PVD) utilisant un métal tel que le chrome ou l'aluminium.

### L'ensemble de parois réfléchissantes (363-366)

Les parois de l'ensemble de parois réfléchissantes 363-366 peuvent être réalisées en une matière apte à réfléchir les ondes électromagnétiques, telle que l'aluminium par exemple. Elles peuvent être réalisées par exemple en moulage en fonderie (ou par frittage, impression 3D...), avec facultativement un usinage/rectification des faces internes à la cavité réfléchissante 400 afin d'obtenir un aspect réfléchissant.

Alternativement (voir figures 4, 5 et 6), les parois de l'ensemble de parois réfléchissantes 363-366 peuvent être réalisées en une matière plastique. Elles peuvent être réalisées par moulage, notamment par injection. Dans ce cas, les parois sont recouvertes d'une couche réfléchissante apte à réfléchir les ondes électromagnétiques dans la cavité réfléchissante 400. Cette couche réfléchissante peut être un revêtement ou un placage (« coating/plating ») déposé par un procédé de dépôt physique en phase vapeur (acronyme anglais PVD) utilisant un métal tel que le chrome ou l'aluminium. Cette couche réfléchissante peut également être une poudre métallique déposée par projection, ou un film métallisé surmoulée, inséré ou collé, ou une cage métallique surmoulée.

De façon préférentielle, les parois réfléchissantes 363-366 comportent une première paire de parois réfléchissantes 363-364 se faisant face, et une seconde paire 365-366 de parois réfléchissantes se faisant face et sensiblement perpendiculaires aux parois de la première paire 363-364. De façon préférentielle également, les parois de l'ensemble de parois réfléchissantes 363-366 sont sensiblement perpendiculaires aux première 361 et seconde 362 parois. De façon encore préférentielle, les parois de l'ensemble 360 de parois délimitant l'enveloppe réfléchissante sont sensiblement planes de façon à optimiser la réflexion des ondes dans la cavité 400. Ainsi, le boitier 350 a une forme sensiblement de parallélépipède.

Nous allons maintenant décrire **un premier mode de réalisation** en référence aux **figures 2 et 3****.**

Selon ce mode de réalisation, les parois de l'ensemble de parois réfléchissantes 363-366 comportent une première paire de parois réfléchissantes 363-364 se faisant face, et une seconde paire 365-366 de parois réfléchissantes se faisant face et sensiblement perpendiculaires aux parois de la première paire 363-364. De plus, les parois de l'ensemble de parois réfléchissantes 363-366 sont sensiblement perpendiculaires aux première 361 et seconde 362 parois.

Les parois 360 sont sensiblement planes (voir figure 3) au moins dans leurs parties faisant face à la cavité 400, de façon à optimiser la réflexion des ondes dans la cavité 400.

La première paire de parois réfléchissantes 363-364 forme une paire de flasques (voir figure 2), en aluminium moulé et usiné par exemple, apte à venir s'emboîter de façon étanche aux extrémités de la seconde paire 365-366 de parois réfléchissantes.

La seconde paire 365-366 de parois réfléchissantes peuvent par exemple être des tronçons découpés à la longueur souhaitée de profilés en aluminium extrudé. La première paire de parois réfléchissantes 363-364 comporte des rainures/glissières pour positionner les première 361 et seconde 362 parois, et les maintenir en position. La première paire de parois réfléchissantes 363-364 comporte également des raidisseurs anti-déformation afin de mieux résister aux chocs et/ou de limiter les effets de la dilatation thermique. La profondeur et les formes des emboitements entre les paires 363-364 et 365-366 réalisent un effet de chicane procurant l'étanchéité à la propagation des ondes ainsi que la perpendicularité entre les faces.

Nous allons maintenant décrire **un deuxième mode de réalisation** en référence aux **figures 4** à **6****.**

Selon ce mode de réalisation, le boitier 350 est réalisé en deux parties, un couvercle 350A, et un réceptacle 350B. Chaque partie 350A, 350B, forme de préférence une cuvette comportant une paroi de fond, et/ou des parois latérales. Selon un exemple de réalisation représenté sur les figures 4 et 5, les parois latérales de chaque partie sont munies d'un rebord formant une collerette périphérique de fixation des deux parties entre elles. De préférence un joint d'étanchéité est positionné tout le long de la collerette.

Selon une variante non représentée, le couvercle 350A peut être sensiblement plat, c'est-à-dire sans paroi latérale. Le couvercle 350A possède alors un rebord dans le prolongement du plat pour s'appuyer sur le rebord du réceptacle 350B. Selon cette variante, l'ensemble de parois latérales réfléchissantes 363-366 est porté par le réceptacle 350B. Inversement, le réceptacle peut être quasiment plat, l'ensemble des parois latérales réfléchissantes 363-366 étant porté par le couvercle 350A.

La figure 4 illustre le boitier 350 vu de dessus, et la figure 5 illustre le boitier 350 vu de dessous.

On se réfère maintenant à la figure 6 qui représente une vue en éclaté de l'antenne 300. La première partie 350A du boitier 350, forme un couvercle, et accueille la première paroi 361. De préférence, ce couvercle 350A comporte sur sa paroi de fond un orifice en regard de la zone de transmission 426 d'ondes électromagnétiques entre l'intérieur et l'extérieur du boitier 350. Ce couvercle 350A comporte également, de préférence sur une paroi latérale (autre que la paroi portant l'orifice), un connecteur 370 pour guide d'onde. Selon une autre variante, notamment lorsque le couvercle 350A est sensiblement plat, c'est le réceptacle 350B qui comporte, de préférence sur une paroi latérale, le connecteur 370 pour guide d'onde.

Le réceptacle 350B du boitier 350 accueille la deuxième paroi 362. Ce réceptacle 350B comporte sur sa paroi de fond une interface connectique 353 permettant d'insérer les éléments de connectique de contrôle 556, servant à connecter la métasurface 500 à un faisceau de contrôle 800 (non représenté).

Selon cet exemple, le boitier 350 comporte également une électronique de contrôle secondaire 550 de la surface pilotée . Cette électronique de contrôle secondaire 550 est selon cet exemple, positionnée en regard de l'interface connectique 353, et entre la paroi de fond du réceptacle 350B et la paroi de guidage 362. Selon une variante de réalisation préférentielle, non représentée, cette électronique de contrôle secondaire est intégrée directement à la paroi de guidage 362, de préférence sur la face externe à la cavité (362e).

Les parois latérales (parois autres que la paroi de fond) d'au moins une des deux parties 350A, 350B forment l'ensemble de parois latérales réfléchissantes 363-366 du boitier 350.

Selon une variante de ce second mode de réalisation, un premier joint d'étanchéité 381 est positionné entre le couvercle 350A et la première paroi 361. Selon une variante de ce second mode de réalisation, un second joint d'étanchéité 382 est positionnée entre le réceptacle 350B et la seconde paroi 362.

Nous allons maintenant décrire **un troisième mode de réalisation** en référence aux **figures 7 et 8****.**

On se réfère maintenant à la figure 7 qui représente une vue en éclaté de l'antenne 300. Selon ce mode de réalisation, l'ensemble de parois latérales réfléchissantes 363-366 sont réalisées monobloc et forment un cadre 367 recouvert par la première paroi 361 et reposant sur la deuxième paroi 362.

De préférence les parois latérales réfléchissantes 363-366 comportent un rebord formant une collerette permettant la fixation du cadre 367 à la deuxième paroi 362.

Chaque partie 350A, 350B, forme une cuvette comportant une paroi de fond, et des parois latérales munies d'un rebord formant une collerette périphérique de fixation des deux parties entre elles. De préférence un joint d'étanchéité à l'eau est positionné tout le long de la collerette.

Le couvercle 350A du boitier 350, forme un couvercle, et accueille le cadre réfléchissant 367 et, sur sa paroi de fond, la première paroi 361. De préférence, ce couvercle 350A comporte sur sa paroi de fond un orifice en regard de la zone de transmission 426 d'ondes électromagnétiques entre l'intérieur et l'extérieur du boitier 350. Ce couvercle 350A comporte également, de préférence sur une paroi latérale (autre que la paroi portant l'orifice), un connecteur 370 pour guide d'onde.

La seconde partie 350B du boitier 350, forme un réceptacle, et accueille la deuxième paroi 362. Ce réceptacle 350B comporte sur sa paroi de fond une interface connectique 353 permettant d'insérer les éléments de connectique de contrôle 556, servant à connecter la métasurface 500 à un faisceau de contrôle 800 (non représenté).

Selon cet exemple, le boitier 350 comporte également une électronique de contrôle secondaire 550 de la surface pilotée . Cette électronique de contrôle secondaire 550 est selon cet exemple, positionnée en regard de l'interface connectique 353, et entre la paroi de fond du réceptacle 350B et la paroi de guidage 362. Selon une variante de réalisation préférentielle, non représentée, cette électronique de contrôle secondaire est intégrée directement à la paroi de guidage 362, de préférence sur la face externe à la cavité (362e).

La figure 8 illustre une vue en perspective et en coupe de l'antenne directive de la figure 7, afin de mieux appréhender le dispositif une fois assemblé.

Selon une variante de ce second mode de réalisation, un premier joint d'étanchéité 381 est positionné entre le couvercle 350A et la première paroi 361. Selon une variante de ce second mode de réalisation, un second joint d'étanchéité 382 est positionnée entre le réceptacle 350B et la seconde paroi 362.

Selon une autre variante, non représentée, la cadre réfléchissant 367 est accueilli par le réceptacle 350B, le couvercle 350A pouvant être sensiblement plat.

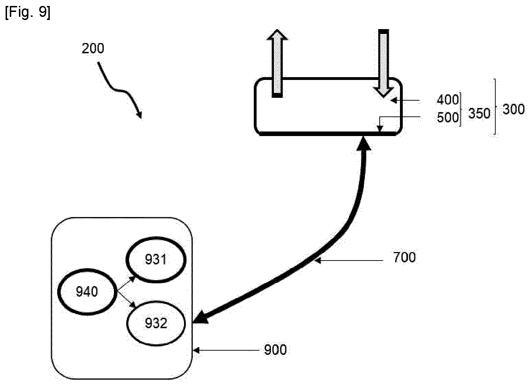

L'invention concerne également **un système radar 200** comportant au moins une antenne directive 300 selon l'invention. En référence à la figure 9, qui représente un exemple particulier de réalisation, le système radar 200 comprend :
- une unité électronique 900 située en dehors et à distance du boitier 350, comprenant un émetteur primaire 931 et un récepteur primaire 932 d'ondes électromagnétiques ;
- au moins un guide d'ondes 700 pour propager des ondes électromagnétiques entre l'émetteur primaire 931 et la cavité 400 et entre la cavité 400 et le récepteur primaire 932.

L'unité électronique 900 est configurée pour opérer à des fréquences supérieures à 60GHz, notamment entre 75 et 80GHz,de préférence à 77GHz.

De préférence, l'unité électronique comporte également une électronique de contrôle 940 des émetteurs 931 et récepteurs 932 primaires.

L'invention concerne également **une pièce de carrosserie 100** comportant une antenne directive 300 selon l'invention.

Enfin, l'invention concerne également **un véhicule à moteur 1** comprenant une pièce de carrosserie 100 selon l'invention.

L'invention n'est pas limitée aux modes de réalisation présentés et d'autres modes de réalisation apparaîtront clairement à l'homme du métier.

### Liste de références

- 1 :: véhicule automobile
- 100 :: pièce de carrosserie
- 200 :: système radar
- 300 :: antenne directive
- 350 :: boitier de l'antenne directive
- 350A :: couvercle du boitier 350
- 350B :: réceptacle du boitier 350
- 360 :: ensemble de parois
- 361 :: première paroi, appelée paroi de transmission
- 362 :: deuxième paroi, appelée paroi de guidage
- 362e :: face externe à la cavité 400 de la paroi 362
- 362i :: face interne à la cavité 400 de la paroi 362
- 363-366: : parois latérales de l'enveloppe réfléchissante
- 367 :: cadre réfléchissant formé par l'ensemble des parois latérales 363-366
- 370 :: connecteur pour guide d'onde 700
- 381 :: premier joint d'étanchéité positionné entre le couvercle 350A et la première paroi 361 (et entourant juste l'orifice de transmission)
- 82 :: second joint d'étanchéité positionné entre le réceptacle 350B et la seconde paroi 362
- 390 :: moyens de fixation du boitier 350 à une pièce de carrosserie 100
- 400 :: cavité réfléchissante pour ondes électromagnétiques
- 426 :: zone de transmission de la paroi de transmission 361, d'ondes électromagnétiques entre l'intérieur et l'extérieur du boitier 350
- 500 :: métasurface
- 510 :: circuit imprimé
- 550 :: électronique de contrôle secondaire de la surface pilotée
- 556 :: éléments de connectique de contrôle apte à connecter la métasurface à une électronique de contrôle principale de la surface pilotée.
- 700 :: guide d'onde
- 900 :: unité électronique du système radar 200
- 931 :: émetteur primaire d'ondes électromagnétiques
- 932 :: récepteur primaire d'ondes électromagnétiques
- 940 :: électronique de contrôle des émetteurs 931 et récepteurs 932 primaires

## Revendications

1. Antenne directive (300) pour système radar (200) de véhicule à moteur (1) comprenant un boitier (350) comportant une enveloppe réfléchissante comportant un volume intérieur formant une cavité réfléchissante (400) pour ondes électromagnétiques, l'enveloppe réfléchissante étant délimitée par un ensemble de parois (360) comprenant :
- une première paroi de transmission (361) comportant une zone (426) de transmission d'ondes électromagnétiques entre l'intérieur et l'extérieur du boitier (350) ;
- une deuxième paroi de guidage (362), opposée à la première paroi (361) et formant un fond de l'enveloppe réfléchissante, comprenant une métasurface (500) apte à guider des ondes électromagnétiques vers la première paroi (361) ou vers un guide d'onde (700) ;
**caractérisée en ce qu'**elle comprend un ensemble de parois latérales réfléchissantes (363-366) reliant les première (361) et seconde (362) parois, chaque paroi latérale étant apte à réfléchir les ondes électromagnétiques au sein de la cavité réfléchissante (400).

2. Antenne directive (300) selon la revendication précédente, dans laquelle au moins une des parois (361-366) comporte, sur sa face externe à la cavité (400), un connecteur (370) pour guide d'onde (700).

3. Antenne directive (300) selon la revendication précédente, dans laquelle la face externe (362e) à la cavité (400) ou la face interne (362i) de la seconde paroi (362) constitue une surface réfléchissante aux ondes électromagnétiques présentes dans la cavité réfléchissante (400).

4. Antenne directive (300) selon l'une des revendications précédentes, dans laquelle la seconde paroi (362) constitue un circuit imprimé (510).

5. Antenne directive (300) selon la revendication précédente, dans laquelle le circuit imprimé (510) comporte une face interne tournée vers l'intérieur de la cavité réfléchissante (400), et sur laquelle est imprimée la métasurface (500).

6. Antenne directive (300) selon l'une des revendications 4 et 5, dans laquelle la métasurface (500) comporte une surface pilotée et des diodes, et le circuit imprimé (510) comporte sur sa face externe, ou est relié à, une électronique de contrôle secondaire (550) de la surface pilotée.

7. Antenne directive (300) selon l'une des revendications précédentes, dans laquelle la zone (426) de transmission d'ondes électromagnétiques est recouverte d'une couche partiellement réfléchissante aux ondes électromagnétiques.

8. Antenne directive (300) selon l'une des revendications précédentes, dans laquelle l'ensemble des parois réfléchissantes (363-366) sont réalisées en aluminium ou en matière plastique recouverte d'une couche réfléchissante apte à réfléchir les ondes électromagnétiques dans la cavité réfléchissante (400).

9. Antenne directive (300) selon l'une des revendications précédentes, dans laquelle l'ensemble de parois réfléchissantes (363-366) sont réalisées monobloc.

10. Antenne directive (300) selon l'une des revendications précédentes, dans laquelle l'ensemble des parois réfléchissantes (363-366) comporte une première paire de parois réfléchissantes (363-364) se faisant face, et une seconde paire (365-366) de parois réfléchissantes se faisant face et sensiblement perpendiculaires aux parois de la première paire (363-364).

11. Antenne directive (300) selon la revendication précédente, dans laquelle le boitier (350) a une forme sensiblement de parallélépipède.

12. Antenne directive (300) selon l'une des revendications 10 et 11, dans laquelle la première paire de parois réfléchissantes (363-364) est apte à venir s'emboîter de façon étanche dans la seconde paire (365-366) de parois réfléchissantes.

13. Antenne directive (300) selon l'une des revendications précédentes, dans laquelle le boitier (350) comporte un couvercle (350A) et un réceptacle (350B) en matière plastique.

14. Système radar (200) comportant au moins une antenne directive (300) selon l'une des revendications précédentes.

15. Système radar (200) selon la revendication précédente, comprenant :
- une unité électronique (900) située en dehors et à distance du boitier (350), comprenant un émetteur primaire (931) et un récepteur primaire (932) d'ondes électromagnétiques ;
- au moins un guide d'ondes (700) pour propager des ondes électromagnétiques entre l'émetteur primaire (931) et la cavité (400) et entre la cavité (400) et le récepteur primaire (932).

16. Système radar (200) selon la revendication précédente, dans lequel l'unité électronique (900) est configurée pour opérer à des fréquences supérieures à 60GHz, notamment entre 75 et 80GHz,de préférence à 77GHz.

17. Pièce de carrosserie (100), **caractérisée en ce qu'**elle comporte une antenne directive (300) selon l'une des revendications 1 à 13.

18. Véhicule à moteur (1) comprenant une pièce de carrosserie (100) selon la revendication précédente.

## Patentansprüche

1. Richtantenne (300) für ein Radarsystem (200) eines Kraftfahrzeugs (1), aufweisend ein Gehäuse (350) mit einer reflektierenden Hülle, die einen Innenraum aufweist, der einen reflektierenden Hohlraum (400) für elektromagnetische Wellen bildet, wobei die reflektierende Hülle durch eine Anordnung von Wänden (360) begrenzt ist, die Folgendes aufweist:
- eine erste Transmissionswand (361) mit einem Bereich (426) für die Übertragung elektromagnetischer Wellen zwischen dem Inneren und dem Äußeren des Gehäuses (350);
- eine zweite Leitwand (362), die der ersten Wand (361) gegenüberliegt und einen Boden des reflektierenden Gehäuses bildet, mit einer Metafläche (500), die elektromagnetische Wellen zur ersten Wand (361) oder zu einem Wellenleiter (700) leiten kann;
**dadurch gekennzeichnet, dass** sie eine Anordnung reflektierender Seitenwände (363-366) aufweist, die die erste (361) und die zweite (362) Wand verbinden, wobei jede Seitenwand dazu eingerichtet ist, die elektromagnetischen Wellen innerhalb des reflektierenden Hohlraums (400) zu reflektieren.

2. Richtantenne (300) nach dem vorstehenden Anspruch, wobei mindestens eine der Wände (361-366) an ihrer dem Hohlraum (400) abgewandten Außenseite einen Anschluss (370) für einen Wellenleiter (700) aufweist.

3. Richtantenne (300) nach dem vorstehenden Anspruch, wobei die dem Hohlraum (400) abgewandte Außenseite (362e) oder die dem Hohlraum (400) zugewandte Innenseite (362i) der zweiten Wand (362) eine reflektierende Oberfläche für die im reflektierenden Hohlraum (400) vorhandenen elektromagnetischen Wellen bildet.

4. Richtantenne (300) nach einem der vorstehenden Ansprüche, wobei die zweite Wand (362) eine Leiterplatte (510) bildet.

5. Richtantenne (300) nach dem vorstehenden Anspruch, wobei die Leiterplatte (510) eine dem Inneren des reflektierenden Hohlraums (400) zugewandte Innenseite aufweist, auf der die Metafläche (500) aufgedruckt ist.

6. Richtantenne (300) nach einem der Ansprüche 4 und 5, wobei die Metafläche (500) eine angesteuerte Oberfläche und Dioden aufweist und die Leiterplatte (510) auf ihrer Außenseite eine sekundäre Steuerelektronik (550) für die angesteuerte Oberfläche aufweist oder mit dieser verbunden ist.

7. Richtantenne (300) nach einem der vorstehenden Ansprüche, wobei der Bereich (426) zur Übertragung elektromagnetischer Wellen mit einer für elektromagnetische Wellen teilweise reflektierenden Schicht bedeckt ist.

8. Richtantenne (300) nach einem der vorstehenden Ansprüche, wobei die Gesamtheit der reflektierenden Wände (363-366) aus Aluminium oder aus Kunststoff besteht, der mit einer reflektierenden Schicht überzogen ist, die geeignet ist, die elektromagnetischen Wellen in den reflektierenden Hohlraum (400) zu reflektieren.

9. Richtantenne (300) nach einem der vorstehenden Ansprüche, wobei die Gesamtheit der reflektierenden Wände (363-366) einteilig ausgebildet ist.

10. Richtantenne (300) nach einem der vorstehenden Ansprüche, wobei die Gesamtheit der reflektierenden Wände (363-366) ein erstes Paar einander gegenüberliegender reflektierender Wände (363-364) sowie ein zweites Paar (365-366) einander gegenüberliegender reflektierender Wände, die im Wesentlichen senkrecht zu den Wänden des ersten Paares (363-364) stehen.

11. Richtantenne (300) nach dem vorstehenden Anspruch, wobei das Gehäuse (350) im Wesentlichen die Form eines Parallelepipeds aufweist.

12. Richtantenne (300) nach einem der Ansprüche 10 und 11, wobei das erste Paar reflektierender Wände (363-364) so ausgebildet ist, dass es dichtend in das zweite Paar (365-366) reflektierender Wände eingesteckt werden kann.

13. Richtantenne (300) nach einem der vorstehenden Ansprüche, wobei das Gehäuse (350) einen Deckel (350A) und einen Sockel (350B) aus Kunststoff aufweist.

14. Radarsystem (200) mit mindestens einer Richtantenne (300) gemäß einem der vorstehenden Ansprüche.

15. Radarsystem (200) nach dem vorstehenden Anspruch, aufweisend:
- eine außerhalb und in einem Abstand zum Gehäuse (350) angeordnete Elektronikeinheit (900), die einen Primärsender (931) und einen Primärempfänger (932) für elektromagnetische Wellen aufweist;
- mindestens einen Wellenleiter (700) zur Ausbreitung elektromagnetischer Wellen zwischen dem Primärsender (931) und dem Hohlraum (400) sowie zwischen dem Hohlraum (400) und dem Primärempfänger (932).

16. Radarsystem (200) nach dem vorstehenden Anspruch, wobei die Elektronikeinheit (900) so eingerichtet ist, dass sie bei Frequenzen über 60 GHz, insbesondere zwischen 75 und 80 GHz, vorzugsweise bei 77 GHz, arbeitet.

17. Karosserieteil (100), **dadurch gekennzeichnet, dass** es eine Richtantenne (300) gemäß einem der Ansprüche 1 bis 13 aufweist.

18. Kraftfahrzeug (1) mit einem Karosserieteil (100) gemäß dem vorstehenden Anspruch.

## Claims

1. Directional antenna (300) for a motor vehicle (1) radar system (200) comprising a housing (350) having a reflective enclosure with an internal volume forming a reflective cavity (400) for electromagnetic waves, the reflective enclosure being bounded by a set of walls (360) comprising:
- a first transmission wall (361) comprising a region (426) for transmitting electromagnetic waves between the interior and exterior of the housing (350);
- a second guiding wall (362), opposite the first wall (361) and forming a base of the reflective enclosure, comprising a metasurface (500) capable of guiding electromagnetic waves towards the first wall (361) or towards a waveguide (700);
**characterised in that** it comprises a set of reflective side walls (363-366) connecting the first (361) and second (362) walls, each side wall being capable of reflecting the electromagnetic waves within the reflective cavity (400).

2. Directional antenna (300) according to the preceding claim, in which at least one of the walls (361-366) comprises, on its outer face relative to the cavity (400), a connector (370) for a waveguide (700).

3. Directional antenna (300) according to the preceding claim, in which the outer face (362e) of the cavity (400) or the inner face (362i) of the second wall (362) constitutes a surface that reflects the electromagnetic waves present in the reflective cavity (400).

4. Directional antenna (300) according to one of the preceding claims, in which the second wall (362) constitutes a printed circuit board (510).

5. Directional antenna (300) according to the preceding claim, in which the printed circuit (510) comprises an inner face facing the interior of the reflective cavity (400), and on which the metasurface (500) is printed.

6. Directional antenna (300) according to one of claims 4 and 5, in which the metasurface (500) comprises a driven surface and diodes, and the printed circuit board (510) comprises, on its outer face, or is connected to, secondary control electronics (550) for the driven surface.

7. Directional antenna (300) according to one of the preceding claims, in which the electromagnetic wave transmission zone (426) is covered with a layer that is partially reflective to electromagnetic waves.

8. Directional antenna (300) according to one of the preceding claims, in which all of the reflective walls (363-366) are made of aluminium or plastic coated with a reflective layer capable of reflecting electromagnetic waves into the reflective cavity (400).

9. Directional antenna (300) according to one of the preceding claims, in which the set of reflective walls (363-366) is formed as a single piece.

10. Directional antenna (300) according to one of the preceding claims, in which the set of reflective walls (363-366) comprises a first pair of reflective walls (363-364) facing one another, and a second pair (365-366) of facing reflective walls that are substantially perpendicular to the walls of the first pair (363-364).

11. Directional antenna (300) according to the preceding claim, in which the housing (350) is substantially parallelepiped in shape.

12. A directional antenna (300) according to one of claims 10 and 11, in which the first pair of reflective walls (363-364) is adapted to fit tightly into the second pair (365-366) of reflective walls.

13. Directional antenna (300) according to one of the preceding claims, in which the housing (350) comprises a cover (350A) and a receptacle (350B) made of plastic.

14. Radar system (200) comprising at least one directional antenna (300) according to one of the preceding claims.

15. Radar system (200) as per the preceding claim, comprising:
- an electronic unit (900) located outside and at a distance from the housing (350), comprising a primary transmitter (931) and a primary receiver (932) for electromagnetic waves;
- at least one waveguide (700) for propagating electromagnetic waves between the primary transmitter (931) and the cavity (400) and between the cavity (400) and the primary receiver (932).

16. Radar system (200) according to the preceding claim, in which the electronic unit (900) is configured to operate at frequencies above 60 GHz, in particular between 75 and 80 GHz, preferably at 77 GHz.

17. Body panel (100), **characterised in that** it comprises a directional antenna (300) according to one of claims 1 to 13.

18. Motor vehicle (1) comprising a body panel (100) as defined in the preceding claim.
